# EUROPÄISCHE PATENTSCHRIFT

(11) **EP 2 914 891 B1**
(45) Veröffentlichungstag und Bekanntmachung des Hinweises auf die Patenterteilung: **25.11.2020**
(21) Anmeldenummer: 13779521.7
(22) Anmeldetag: 17.10.2013
(51) Int. Cl.: F16P 3/08, E05B 47/06

(54) **VORRICHTUNG ZUM LÖSBAREN ARRETIEREN EINES VORGEBBAREN ZUSTANDES EINER EINRICHTUNG SOWIE SICHERHEITSSCHALTER MIT EINER SOLCHEN VORRICHTUNG**
MECHANISM FOR RELEASEABLY ARRESTING A PREDETERMINABLE STATE OF A DEVICE, AND SAFETY SWITCH HAVING SUCH A MECHANISM
MÉCANISME POUR LE VERROUILLAGE RÉVERSIBLE D'UNE POSITION PRÉDÉTERMINÉ D'UN DISPOSITIF AINSI QU'INTERRUPTEUR DE SÉCURITÉ DOTÉ D'UN TEL DISPOSITIF

(30) Priorität: 31.10.2012 DE 102012021968
(43) Veröffentlichungstag der Anmeldung: 09.09.2015
(73) Patentinhaber: EUCHNER GmbH + Co. KG, 70771 Leinfelden-Echterdingen (DE)
(72) Erfinder: GRIMM, Ilo, 71111 Waldenbruch (DE)
(74) Vertreter: Ruckh, Rainer Gerhard
(86) Internationale Anmeldenummer: PCT/EP2013/003121
(87) Internationale Veröffentlichungsnummer: WO 2014/067622

(56) Entgegenhaltungen:
- WO-A1-2008/009319
- DE-A1-102004 038 488
- DE-B3-102004 049 024
- US-A- 4 554 907

## Beschreibung

Die vorliegende Erfindung betrifft einen Sicherheitsschalter mit einer Vorrichtung zum lösbaren Arretieren eines vorgebbaren Zustandes einer Einrichtung, insbesondere zum lösbaren Arretieren oder Zuhalten des geschlossenen Zustandes einer Schutzeinrichtung einer Maschine oder dergleichen.

Sicherheitsschalter werden beispielsweise zum Überwachen des Zustandes einer Schutzeinrichtung einer Maschine eingesetzt, etwa zum Überwachen des geschlossen Zustandes einer Schutztür eines Schutzraumes für eine Werkzeugmaschine oder einen Industrieroboter. Im geschlossenen Zustand der Schutzeinrichtung kann der Sicherheitsschalter ein Freigabesignal für den Betrieb der Maschine bereitstellen. Beim Öffnen der Schutzeinrichtung unterbricht der Sicherheitsschalter beispielsweise mittels eines durch Formschluss zu betätigenden elektrischen Kontaktpaares oder mittels eines elektronischen Schaltelements einen oder mehrere Stromkreise. Das Freigabesignal wird daraufhin nicht mehr bereitgestellt. Die zugehörige Maschine kann daraufhin in einen sicheren Betriebszustand überführt werden, beispielsweise abgeschaltet werden, oder das Einschalten der Maschine kann verhindert werden.

In einigen Anwendungsfällen ist es erforderlich, dass der geschlossene Zustand der Schutzeinrichtung lösbar arretierbar ist, beispielsweise wenn in einem Betriebszustand der Maschine verhindert werden soll, dass die Schutzeinrichtung geöffnet werden kann. Erst bei völligem Stillstand der Maschine wird die Arretierung aufgehoben und die Schutzeinrichtung kann geöffnet werden.

Bei Sicherheitsschaltern mit mechanischen Betätigern erfolgt eine solche Arretierung oder Zuhaltung durch Arretieren des mechanischen Betätigers in seinem in einen Schalterkopf des Sicherheitsschalters eingeführten Zustand, wie aus der DE 43 28 297 C1 oder der DE 10 2004 038 488 A1 bekannt. Aus der DE 197 11 588 A1 oder der DE 10 2004 049 024 B3 ist ein berührungsloser Positionsschalter bekannt. Aus der DE 101 46 828 A1 ist für einen Sicherheitsschalter mit einem elektronischen Betätiger eine Magnetkraftzuhaltung bekannt.

Die Anordnung derartiger Vorrichtungen und Sicherheitsschalter muss in der Praxis an die jeweiligen baulichen Gegebenheiten angepasst werden, beispielsweise je nachdem, wo die Schutzeinrichtung der Maschine genügend Bauraum für die Anordnung der Vorrichtung oder des Sicherheitsschalters zur Verfügung stellt.

Die US 4 554 907 A betrifft einen Schließmechanismus für eine Tür eines Ofens. Der Schließmechanismus umfasst zwei um eine gemeinsame Achse drehbare Arme. Jeder Arm weist ein gebogenes Langloch auf. Die Langlöcher überschneiden sich, wobei in beiden Langlöchern ein Stift geführt ist. Somit können durch Führungsmittel die Arme zwischen einer Schließstellung und einer Öffhungsstellung gehalten werden. Für eine lösbare Arretierung der Arme in der Schließstellung ist ein Stopelement vorgesehen, das motorisch gesteuert ist.

Der vorliegenden Erfindung liegt die Aufgabe zugrunde, einen Sicherheitsschalter bereitzustellen, der einerseits möglichst wenig Bauraum in Anspruch nimmt, aber andererseits höchste Sicherheitsanforderungen erfüllt, auch hinsichtlich der Zuhaltekraft.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die Erfindung betrifft einen Sicherheitsschalter zum Signalisieren eines vorgebbaren Zustandes einer Einrichtung, mit einer Vorrichtung zum lösbaren Arretieren eines vorgebbaren Zustandes der Einrichtung, insbesondere zum lösbaren Zuhalten des geschlossenen Zustandes einer Schutzeinrichtung einer Maschine. Die Vorrichtung umfasst eine an einem ersten Teil der Einrichtung festlegbare Eingriffseinrichtung, die mindestens ein Eingriffselement aufweist, das in dem zu arretierenden vorgebbaren Zustand der Einrichtung in Eingriff mit einer Aufnahmeeinrichtung bringbar ist. Die Aufnahmeeinrichtung ist einem zweiten Teil der Einrichtung festlegbar oder Bestandteil des zweiten Teils der Einrichtung. Dadurch ist der vorgebbare Zustand der Einrichtung arretierbar. Der Sicherheitsschalter weist einen an dem einen Teil der Einrichtung festlegbaren Lesekopf und einen mit dem Lesekopf vorzugsweise kontaktlos in Wirkverbindung bringbaren und an dem anderen Teil der Einrichtung festlegbaren Betätiger auf. Das Eingriffselement ist aus einer Ausgangsstellung heraus um eine erste Achse drehbar und dabei in dem zu arretierenden vorgebbaren Zustand der Einrichtung in Eingriff mit der Aufnahmeeinrichtung bringbar. Die Vorrichtung weist ein gesteuert aktivierbares Arretierelement auf, das beim Aktivieren in Anlage an das Eingriffselement bringbar und dadurch ein Zurückdrehen des Eingriffselement durch Formschluss blockiert und somit den vorgebbaren Zustand der Einrichtung arretiert.

Erfindungsgemäß weist die Eingriffseinrichtung zwei Eingriffselemente auf, die aus ihrer jeweiligen Ausgangsstellung heraus gegensinnig drehbar sind und dabei jeweils in Eingriff mit der Aufnahmeeinrichtung bringbar sind.

In einer Ausführungsart betrifft die Erfindung eine Vorrichtung zum lösbaren Arretieren eines vorgebbaren Zustandes einer Einrichtung, insbesondere zum lösbaren Zuhalten des geschlossenen Zustandes einer Schutzeinrichtung einer Maschine, mit einer an einem ersten, vorzugsweise feststehenden Teil der Einrichtung festlegbaren Eingriffseinrichtung, die mindestens ein Eingriffselement aufweist, das in dem zu arretierenden vorgebbaren Zustand der Einrichtung in Eingriff mit einer Aufnahmeeinrichtung bringbar ist, die an einem zweiten, vorzugsweise gegenüber dem ersten Teil beweglichen Teil der Einrichtung festlegbar ist oder Bestandteil des zweiten Teils der Einrichtung ist, und dadurch der vorgebbare Zustand der Einrichtung arretierbar ist. Das Eingriffselement ist aus einer Ausgangsstellung heraus um eine erste Achse drehbar und dabei in dem zu arretierenden vorgebbaren Zustand der Einrichtung in Eingriff mit der Aufnahmeeinrichtung bringbar. Die Vorrichtung weist ein gesteuert aktivierbares Arretierelement auf, das beim Aktivieren in Anlage an das Eingriffselement bringbar ist und dadurch ein Zurückdrehen des Eingriffselements durch Formschluss blockiert und somit den vorgebbaren Zustand der Einrichtung arretiert.

Das Drehen des Eingriffselements in die Position, in welcher das Eingriffselement in Eingriff mit der Aufnahmeeinrichtung bringbar ist, kann unabhängig von einer Relativbewegung der beiden Teile der Einrichtung zueinander erfolgen. Das Eingriffselement kann gegenüber mindestens einem weiteren Teil der Eingriffseinrichtung, beispielsweise gegenüber einem Lagerteil der Eingriffseinrichtung, drehbar sein und insbesondere schwenkbar, d.h. hin und her drehbar. Dadurch ist die Vorrichtung besonders vorteilhaft bei Schiebetüren einsetzbar. Beispielsweise kann die Eingriffseinrichtung an einem feststehenden Rahmen einer Schiebetür angeordnet sein, insbesondere in einer Profilschiene des Rahmens für die Schiebetür. Die Aufnahmeeinrichtung kann an einem beweglichen Teil der Einrichtung angeordnet sein, insbesondere in einer Profilschiene eines Rahmens der Schiebetür.

Durch das schwenkbare Eingriffselement ist auf platzsparende und mechanisch sicher zu betätigende Weise eine Arretierung gewährleistet. Durch ein formschlüssiges Blockieren des Zurückdrehens des Eingriffselements, beispielsweise indem das Arretierelement der Rückdrehbewegung des Eingriffselements im Wege steht, können hohe Arretierkräfte realisiert werden, beispielsweise hohe Zuhaltekräfte für den geschlossenen Zustand einer Schutzeinrichtung einer Maschine.

In einer Ausführungsart der Erfindung weist das Eingriffselement einen Eingriffsschenkel auf, der in der Ausgangsstellung des Eingriffselements bei einer Annäherung der beiden Teile der Einrichtung in eine einen Hinterschnitt aufweisende Nut der Aufnahmeeinrichtung einführbar ist. Die Ausgangsstellung des Eingriffselements kann lösbar fixierbar sein, beispielsweise mittels eines Federelements, eines Rastelements oder auch durch eine entsprechende Stellung des Arretierelements.

Der Eingriffsschenkel kann beim Drehen des Eingriffselements in den Hinterschnitt der Nut eingreifen und dadurch den vorgebbaren Zustand der Einrichtung arretieren. Die bei einem Eingriff des Eingriffselements in den Hinterschnitt der Nut einander zugeordneten Flächen des Eingriffselements einerseits und der Nut andererseits können derart ausgestaltet sein, dass eine die Aufhebung des vorgebbaren Zustandes der Einrichtung bewirkende Kraft, beispielsweise eine Zugkraft zum Öffnen des geschlossenen Zustandes der Schutzreinrichtung der Maschine, automatisch eine Rückstellkraft auf das Eingriffselement ausübt, beispielsweise eine Kraft zum Zurückdrehen des Eingriffsschenkels in Richtung seiner Ausgangsstellung.

In einer Ausführungsart weist das Eingriffselement eine vorzugsweise konkave Arretierfläche auf, an welche das Arretierelement in seinem aktivierten Zustand in Anlage bringbar ist. Die Arretierfläche kann bezogen auf die erste Achse, um welche das Eingriffselement drehbar ist, dem Eingriffsschenkel im Wesentlichen gegenüberliegen. Durch die konkave Form ist unter anderem ein platzsparendes Eindrehen des Arretierelements möglich. Die Arretierfläche kann mindestens teilweise kreisförmig sein. Durch die Anlage des Arretierelements ist ein Zurückdrehen des Eingriffselements formschlüssig blockiert, d. h., dass für das Blockieren kein Reibschluss erforderlich ist. Dadurch kann auch für den Fall, dass der wirksame Hebelarm der Arretierfläche geringer ist als der wirksame Hebelarm des Eingriffsschenkels, zuverlässig ein Blockieren des Eingriffselements erreicht werden.

In einer Ausführungsart ist das Arretierelement beim Aktivieren aus einer Ausgangsstellung heraus um eine zweite Achse drehbar und dabei in Anlage an das Eingriffselement bringbar. Alternativ oder ergänzend kann das Arretierelement auch schiebbar in Anlage an das Eingriffselement bringbar sein; die Drehachse kann mit der Schieberichtung oder sogar der Schiebeachse übereinstimmen. Das Arretierelement kann motorisch antreibbar sein. Die Arretierfläche des Eingriffselements und die zugehörige Fläche des Arretierelements können auch derart ausgestaltet sein, dass bei einer Aktivierung des Arretierelements, insbesondere bei einem Drehen des Arretierelements, das Eingriffselement in seine vollständig aus der Ausgangsstellung heraus gedrehte Position überführbar ist und dadurch sicher in Eingriff mit der Aufnahmeeinrichtung bringbar ist. Die Arretierfläche des Eingriffselements und die zugeordnete Anlagefläche des Arretierelements können mindestens abschnittsweise kongruent ausgebildet sein.

In einer Ausführungsart sind die erste Achse, um die das Eingriffselement drehbar ist, und die zweite Achse, um die das Arretierelement drehbar ist, parallel zueinander ausgerichtet. Dadurch ist eine platzsparende Anordnung der Eingriffseinrichtung, insbesondere der ersten und zweiten Achse, in einer Nut einer Profilschiene vereinfacht möglich. Insbesondere kann das Arretierelement vor mechanischen Beschädigungen geschützt unterhalb des Eingriffselements in der Nut angeordnet sein.

In einer Ausführungsart weist das Eingriffselement eine erste Anlagefläche auf, die bei einer Annäherung der Eingriffseinrichtung an die Aufnahmeeinrichtung in Anlage an ein Spreizmittel der Aufnahmeeinrichtung bringbar ist. Beim weiteren Annähern gleitet das Eingriffselement an dem Spreizmittel entlang. Dabei ist das Eingriffselement um die erste Achse drehbar. Die erste Anlagefläche kann an oder nahe dem freien Ende an dem Eingriffsschenkel angeordnet sein. Die erste Anlagefläche kann beispielsweise durch einen bogenförmig oder schräg abstehenden Endabschnitt des Eingriffsschenkels gebildet sein.
Das Spreizmittel der Aufnahmeeinrichtung kann feststehend sein und beispielsweise eine spitzwinklige Auflaufschräge für die Anlagefläche des Eingriffsschenkels aufweisen.

In einer Ausführungsart weist das Eingriffselement eine zweite Anlagefläche auf, die bei einem Entfernen der Eingriffseinrichtung von der Aufnahmeeinrichtung in Anlage an ein Rückstellmittel der Aufnahmeeinrichtung bringbar ist. Beim weiteren Entfernen kann die zweite Anlagefläche an dem Rückstellmittel entlanggleiten und dabei das Eingriffselement um die erste Achse in Richtung seiner Ausgangsstellung zurückdrehen. Die zweite Anlagefläche kann durch eine an oder nahe dem freien Ende des Eingriffsschenkels angeordnete, abschnittsweise bogenförmig, insbesondere konkav, und/oder schräg verlaufende Fläche gebildet sein. Das Rückstellmittel der Aufnahmeeinrichtung kann durch eine Kante eines Profils gebildet sein, beispielsweise die Kante einer Nut des Profils, an oder in dem die Aufnahmeeinrichtung angeordnet ist oder das die Aufnahmeeinrichtung bildet.

In einer Ausführungsart ist die Eingriffseinrichtung mit dem Eingriffselement und dem Arretierelement in einer einen Hinterschnitt aufweisenden Nut einer ersten Profilschiene angeordnet. Die erste Profilschiene ist an dem ersten, vorzugsweise feststehenden Teil der Einrichtung festlegbar oder Bestandteil des ersten Teils der Einrichtung. Beispielsweise kann die erste Profilschiene Teil eines Rahmens des ersten Teils der Einrichtung sein.

In einer Ausführungsart weist die Aufnahmeeinrichtung eine zweite Profilschiene auf, die an dem zweiten, vorzugsweise beweglichen Teil der Einrichtung festlegbar ist oder Bestandteil des zweiten Teils der Einrichtung ist. Die Nut der Aufnahmeeinrichtung, in welche das Eingriffselement in Eingriff bringbar ist, kann durch die zweite Profilschiene ausgebildet sein. Die zweite Profilschiene kann Teil eines Rahmens des zweiten Teils der Einrichtung sein. Der Querschnitt durch die zweite Profilschiene kann identisch zu dem Querschnitt durch die erste Profilschiene sein, insbesondere können die Querschnitte symmetrisch zu einer zentrischen Achse oder zwei rechtwinklig zueinander stehenden Mittelebenen sein.

Erfindungsgemäß weist die Eingriffseinrichtung zwei oder auch mehrere Eingriffselemente auf, die aus ihrer jeweiligen Ausgangsstellung heraus gegensinnig schwenkbar sind und dabei jeweils in Eingriff mit der Aufnahmeeinrichtung bringbar sind. Die Eingriffselemente sind mindestens paarweise vorzugsweise um dieselbe erste Achse schwenkbar und der gedrehte Zustand der Eingriffselemente kann mindestens paarweise durch ein und dasselbe Arretierelement blockierbar sein.

Weitere Vorteile, Merkmale und Einzelheiten der Erfindung ergeben sich aus den Unteransprüchen sowie der nachfolgenden Beschreibung, in der unter Bezugnahme auf die Zeichnungen mehrere Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.
- Fig. 1: zeigt eine Draufsicht auf eine schematisch dargestellte Gesamtanordnung einer Schutzeinrichtung einer Maschine mit einer erfindungsgemäßen Vorrichtung,
- Fig. 2: zeigt in vergrößerter Darstellung einen Schnitt durch die Eingriffseinrichtung und die Aufnahmeeinrichtung der Vorrichtung der Fig. 1,
- Fig. 3: zeigt einen weiter vergrößerten Ausschnitt der Vorrichtung im vollständig geschlossenen Zustand der Einrichtung,
- Fig. 4: zeigt den Ausschnitt der Fig. 3 mit aktiviertem Arretierelement,
- Fig. 5: zeigt eine perspektivische Ansicht des in der Nut der ersten Profilschiene anzuordnenden Ankerelements, und
- Fig. 6: zeigt eine perspektivische Ansicht des Antriebsmotors des Arretierelements.

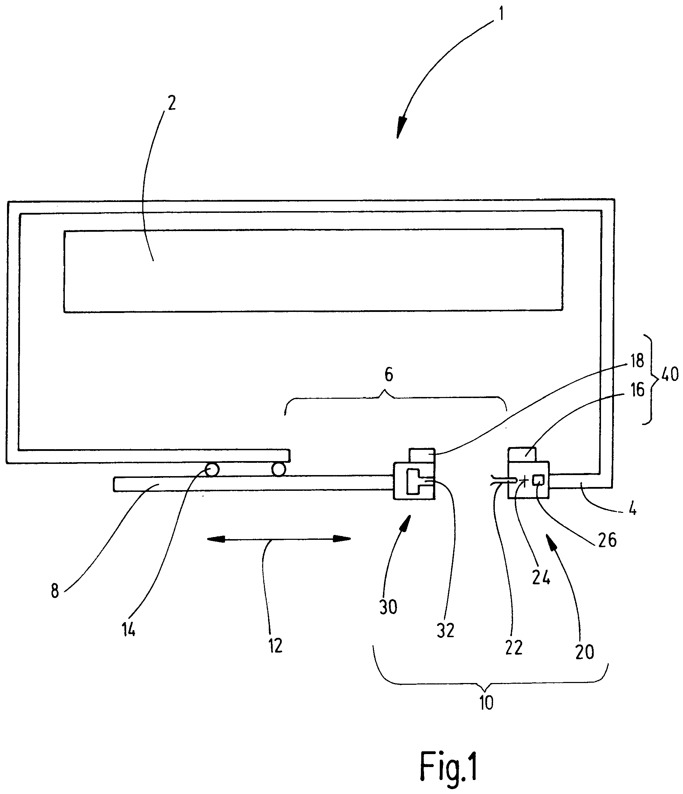

Die Fig. 1 zeigt eine Draufsicht auf eine schematisch dargestellte Gesamtanordnung einer Einrichtung 1, bei der es sich um die Schutzeinrichtung, beispielsweise einen Schutzkäfig, einer Maschine 2 handelt, mit einem Ausführungsbeispiel einer erfindungsgemäßen Vorrichtung 10 zum lösbaren Arretieren des geschlossenen Zustandes der Einrichtung 1. Die Einrichtung 1 weist ein erstes Teil 4 auf, beispielsweise einen Rahmen der Einrichtung 1. Das erste Teil 4 weist eine Öffnung 6 auf, die durch ein zweites Teil 8 schließbar ist, im Ausführungsbeispiel durch eine Schiebetür, die durch Lagerelemente 14 beweglich gelagert und entsprechend dem Doppelpfeil 12 gegenüber dem ersten Teil 4 bewegbar ist.

Die Vorrichtung 10 weist eine an dem ersten Teil 4 der Einrichtung 1 festgelegte Eingriffseinrichtung 20 auf, die im Ausführungsbeispiel zwei Eingriffselemente 22 aufweist, die in dem zu arretierenden, im Ausführungsbeispiel geschlossenen Zustand der Einrichtung 1 in Eingriff mit einer Aufnahmeeinrichtung 30 bringbar sind. Die Aufnahmeeinrichtung 30 ist an dem zweiten Teil 8 der Einrichtung 1 festgelegt oder kann auch Bestandteil des zweiten Teils 8 der Einrichtung 1 sein.

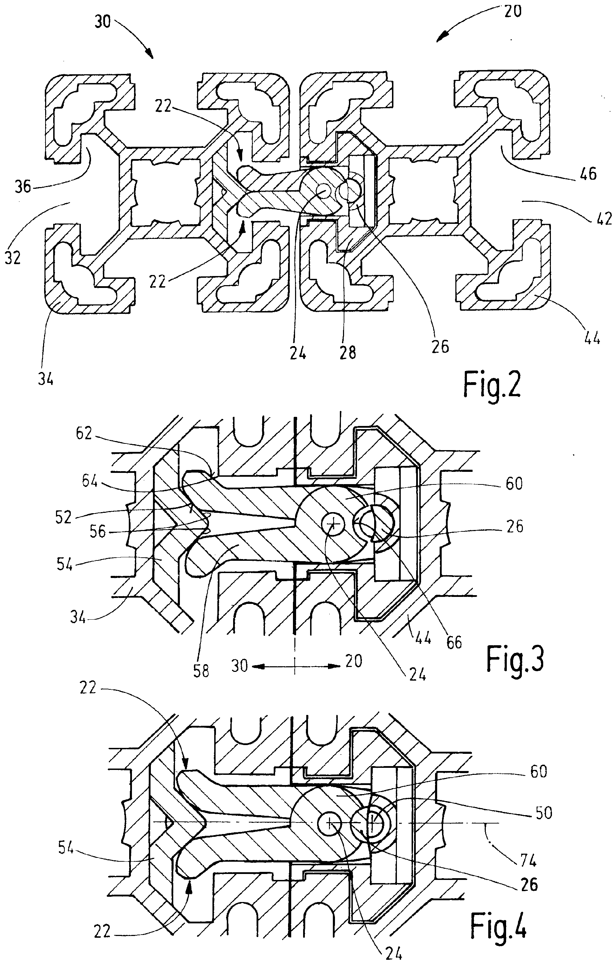

Die Aufnahmeeinrichtung 30 weist eine Nut 32 auf, in welche die Eingriffselemente 22 in einer Ausgangsstellung der Eingriffseinrichtung 20 beim Schließen des zweiten Teils 8 einführbar sind. Durch ein anschließendes Drehen der Eingriffselemente 22 aus der in der Fig. 1 dargestellten Ausgangsstellung heraus um eine senkrecht zur Bewegungsrichtung 12 des zweiten Teils 8 verlaufende erste Achse 24 sind die Eingriffselemente 22 in dem zu arretierenden geschlossenen Zustand der Einrichtung 1 in Eingriff mit der Aufnahmeeinrichtung 30 bringbar, insbesondere in Eingriff mit einem Hinterschnitt 36 (Fig. 2) der Nut 32.
Die Vorrichtung 10 weist ein gesteuert aktivierbares Arretierungselement 26 auf, das beim Aktivieren in Anlage an mindestens eines der Eingriffselemente 22 bringbar ist und dadurch ein Zurückdrehen der Eingriffselemente 22 durch Formschluss blockiert und somit den geschlossenen Zustand der Einrichtung 1 arretiert.

Im Ausführungsbeispiel ist die Vorrichtung 10 Bestandteil eines Sicherheitsschalters 40, der darüber hinaus einen an dem ersten Teil 4 der Einrichtung 1 festlegbaren Lesekopf 16 und einen mit dem Lesekopf 16 vorzugsweise kontaktlos in Wirkverbindung bringbaren und an den zweiten Teil 8 der Vorrichtung festgelegten Betätiger 18 aufweist. Der Lesekopf 16 und der Betätiger 18 sind dabei derart angeordnet und eingestellt, dass sie nur im geschlossenen Zustand der Einrichtung 1 miteinander in Wirkverbindung sind.

Die Fig. 2 zeigt in vergrößerter Darstellung einen Schnitt durch die Eingriffseinrichtung 20 und die Aufnahmeeinrichtung 30 in dem annähernd vollständig geschlossenen Zustand der Einrichtung 1. Die Eingriffseinrichtung 20 ist mit den beiden um die erste Achse 24 drehbaren Eingriffselementen 22 und dem motorisch antreibbaren Arretierelement 26 in einem Ankerelement 28 angeordnet, das in einer einen Hinterschnitt 46 aufweisenden Nut 42 einer ersten Profilschiene 44 angeordnet ist. Das Ankerelement 28 greift in den Hinterschnitt 46 ein und ist dadurch formschlüssig in der Nut 42 festgelegt, wodurch hohe Zuhaltekräfte erreicht sind. Das Ankerelement 28 kann eine mit der Nut 42 im Wesentlichen übereinstimmende Außenkontur aufweisen und insbesondere zylindrisch sein. Die erste Profilschiene 44 kann an dem ersten feststehenden Teil 4 der Einrichtung 1 festlegbar sein oder wie im Ausführungsbeispiel sogar Bestandteil des ersten Teils 4 der Einrichtung 1 sein. Auch der Lesekopf 16 kann abweichend von der Darstellung der Fig. 1 teilweise oder sogar vollständig in einer Nut 42 der Profilschiene 44 angeordnet sein, insbesondere auch in derselben Nut 42 wie das Ankerelement 28.

In dem in der Fig. 2 dargestellten Ausgangszustand der beiden Eingriffselemente 22, bei dem es sich beispielsweise aufgrund der auf die Eingriffselemente 22 wirkendenden Gravitationskraft um einen sich selbsttätig einstellenden Ausgangszustand handeln kann oder um einen mittels eines Federelements, eines Rastmittels oder dergleichen lösbar fixierbaren Ausgangszustand, sind die beiden Eingriffselemente 22 beim Schließen der Einrichtung 1 in eine einen Hinterschnitt 36 aufweisende Nut 32 einer zweiten Profilschiene 34 einführbar. Die zweite Profilschiene 34 kann an dem zweiten Teil 8 der Einrichtung 1 festlegbar sein oder Bestandteil des zweiten Teils 8 der Einrichtung 1 sein. Die zweite Profilschiene 34 kann insbesondere im Querschnitt identisch zu der ersten Profilschiene 44 sein.

Die Fig. 3 zeigt einen weiter vergrößerten Ausschnitt der Vorrichtung 10 im nun vollständig geschlossenen Zustand der Einrichtung 1. Die zweite Profilschiene 34 ist dabei im Wesentlichen in Anlage an der ersten Profilschiene 44. Die beiden Eingriffselemente 22 sind ausgehend von ihrer in der Fig. 2 dargestellten Ausgangsstellung gegensinnig um die erste Achse 24 gedreht. Dies erfolgt selbsttätig dadurch, dass eine erste Anlagefläche 52 des Eingriffselements 22 beim Schließen und der damit verbundenen Annäherung der Eingriffseinrichtung 20 an die Aufnahmeeinrichtung 30 an ein Spreizmittel 54 der Aufnahmeeinrichtung 30 kommt und beim weiteren Annähern an dem Spreizmittel 54 entlanggleitet und dadurch das Eingriffselement 22 um die erste Achse 24 dreht.

Das Spreizmittel 54 weist hierzu für jedes Eingriffselement 22 jeweils eine Spreizflanke 56 auf. Die beiden Spreizflanken 56 können mindestens abschnittsweise eben sein und die ebenen Abschnitte können einen Winkel zwischen 30 und 150° einschließen, insbesondere zwischen 60 und 120° und im Ausführungsbeispiel vorzugsweise etwa 90°. Das Spreizmittel 54 ist in der Nut 32 angeordnet, insbesondere an einer Bodenfläche der Nut 32. Die erste Anlagefläche 52 des Eingriffselements 22 weist abschnittsweise eine teilkreisförmige Kontur auf. Die erste Anlagefläche 52 ist nahe einem freien Ende eines Eingriffsschenkels 58 des Eingriffselements 22 ausgebildet.

Der Eingriffsschenkel 58 ist einstückig mit einer die erste Achse 24 umschließenden Lagerbuchse 60 ausgebildet.

In dem in der Fig. 3 dargestellten Zustand greift das Eingriffselement 22 bereits in den Hinterschnitt 36 der Nut 32 der Aufnahmeeinrichtung 30 ein, allerdings ist diese gedrehte Position noch nicht blockiert, so dass der geschlossene Zustand der Einrichtung 1 noch nicht arretiert ist. Das Eingriffselement 22 weist eine zweite Anlagefläche 62 auf, die bei einem Entfernen der Eingriffseinrichtung 20 von der Aufnahmeeinrichtung 30 in Anlage an ein Rückstellmittel 64 der Aufnahmeeinrichtung 30 bringbar ist und dadurch das Eingriffselement 22 um die erste Achse 24 in Richtung seiner in der Fig. 2 dargestellten Ausgangsstellung zurückdreht.

Das Rückstellmittel 64 ist im Ausführungsbeispiel durch eine am Übergang zu dem Hinterschnitt 36 gebildete Kante der zweiten Profilschiene 34 gebildet. Die zweite Anlagefläche 62 des Eingriffselements 22 kann mindestens abschnittsweise plan sein. Es sind auch Ausführungsformen möglich, in denen das Eingriffselement 22 eine Rückstellkante aufweist, die an einer Anlagefläche der Aufnahmeeinrichtung 30 entlang gleitet.

Die Lagerbuchse 60 des Eingriffselements 22 weist auf der in Bezug auf die erste Achse 24 den Eingriffsschenkeln 58 gegenüberliegenden Seite eine konkave Arretierfläche 66 auf, die sich insbesondere über einen Winkelabschnitt von mehr als 60°, insbesondere mehr als 90° und im Ausführungsbeispiel etwa 150° erstreckt. In dem in der Fig. 3 dargestellten Zustand ist das Arretierelement 26 noch nicht aktiviert. Dadurch sind die beiden Eingriffselemente 22 um die erste Achse 24 jedenfalls in dem Maße schwenkbar, dass ein Öffnen der Einrichtung 1 möglich ist.

Die Fig. 4 zeigt den Ausschnitt der Fig. 3 mit aktiviertem Arretierelement 26. Im Ausführungsbeispiel wurde hierzu das Arretierelement 26 um eine zweite Achse 50 um etwa 180° gedreht und dadurch in Anlage an das Eingriffselement 22 gebracht, insbesondere an die Arretierfläche 66. Hierzu weist das Arretierelement 26 eine mindestens abschnittsweise im Querschnitt teilkreisförmige Kontur auf, die mit der Arretierfläche 66 mindestens abschnittsweise kongruent sein kann. Im Ausführungsbeispiel erstreckt sich der teilkreisförmige Abschnitt über einen Winkelbereich von mehr als 180°, insbesondere etwa 210°. Dadurch kommt das Arretierelement 26 in Anlage an das Eingriffselement 22 und blockiert ein Zurückdrehen des Eingriffselements 22.

Die erste Achse 24 und die zweite Achse 50 verlaufen parallel zueinander auf der Mittelebene. 74 der Nut 42 und senkrecht zur Zeichenebene der Figuren 2 bis 4. In den Figuren 2 bis 4 ist lediglich aus Gründen der vereinfachten Darstellung weder der Lesekopf 16 noch der Betätiger 18 des Sicherheitsschalters 40 der Fig. 1 dargestellt. Besonders vorteilhaft ist, wenn der Lesekopf 16, der eine elektrische Energieversorgung benötigt, in dem Teil der Einrichtung 1 angeordnet ist, der das motorisch antreibbare Arretierelement 26 aufweist. In diesem Fall ist für das andere Teil der Einrichtung 1 keine elektrische Energieversorgung erforderlich.

Alternativ zu dem dargestellten Ausführungsbeispiel kann das Eingriffselement 22 auch durch ein motorisch angetriebenes Anheben des am Boden der Nut 32 angeordneten Spreizmittels 54 erfolgen, so dass in diesem Fall eine elektrische Energieversorgung lediglich für das die Aufnahmeeinrichtung 30 aufweisenden Teils der Einrichtung 1 erforderlich ist.

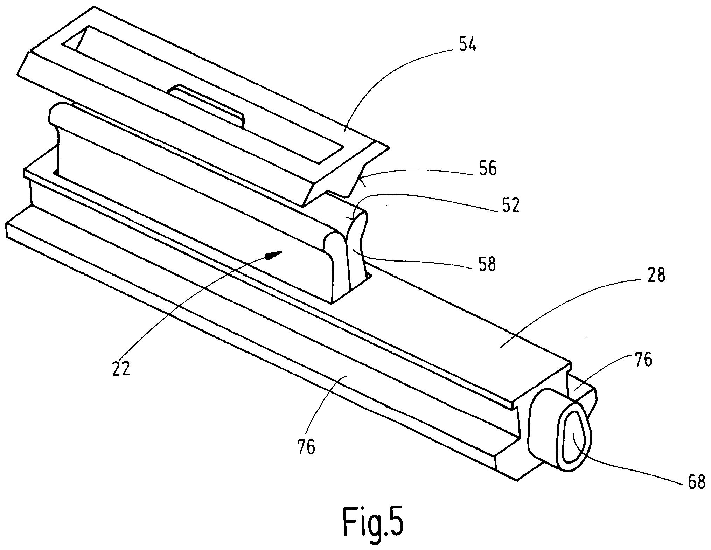

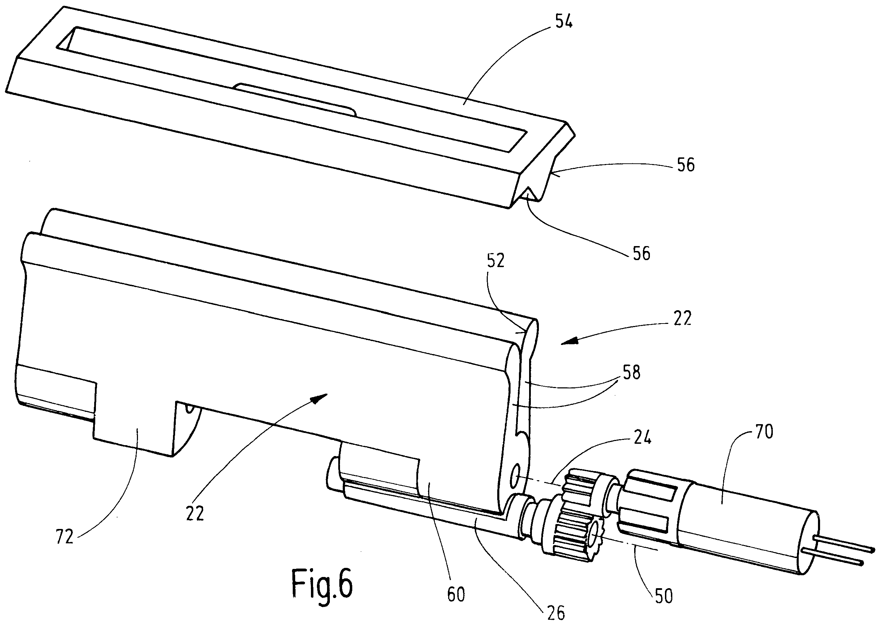

Die Fig. 5 zeigt eine perspektivische Ansicht des in der Nut 42 der ersten Profilschiene 44 anzuordnenden Ankerelements 28 mit den beiden Eingriffselementen 22 in ihrer nicht gedrehten Ausgangsstellung und einer elektrischen Anschlusseinheit 68 für den in der Fig. 6 dargestellten Antriebsmotor 70, sowie das in der Nut 32 der zweiten Profilschiene 34 anzuordnende Spreizmittel 54. Das Ankerelement 28 nimmt zentrisch entlang seiner Längsachse den Antriebsmotor 70 und die Eingriffselemente 22 auf. Das Ankerelement 28 ist in seinem Querschnitt an die Nut 42 der ersten Profilschiene 44 angepasst. Das Ankerelement 28 greift mit seinen beiden, sich entlang der Längsachse erstreckenden und in Bezug auf die Längsachse einander gegenüberliegenden Schultern 76 formschlüssig in den Hinterschnitt 46 der Nut 42 ein.

Die Fig. 6 zeigt eine perspektivische Ansicht des Antriebsmotors 70, der über eine vorzugsweise untersetzende Zahnradverbindung das Arretierelement 26 antreibt. Beide Eingriffselemente 22 weisen jeweils einen sich axial über eine Länge von mehr 10 mm, im Ausführungsbeispiel etwa 30 mm, erstreckenden Eingriffsschenkel 58 auf, der an bzw. nahe seinem axialen Ende einstückig eine Lagerbuchse 60 für die erste Achse 24 aufweist. An bzw. nahe seinem gegenüberliegenden axialen Ende weist jedes Eingriffselement 22 eine weitere Lagerstelle 72 auf, mittels welcher das Eingriffselement 22 schwenkbar in dem Ankerelement 28 gelagert ist. Es ist besonders vorteilhaft, dass sowohl die Lagerstelle der Eingriffselemente 22 als auch der Antriebsmotor 70 geschützt in dem Ankerelement 28 und mit diesem wiederum in der Nut 42 der ersten Profilschiene 44 angeordnet ist.

## Patentansprüche

1. Sicherheitsschalter zum Signalisieren eines vorgebbaren Zustandes einer Einrichtung, mit einer Vorrichtung (10) zum lösbaren Arretieren eines vorgebbaren Zustandes der Einrichtung (1), insbesondere zum lösbaren Zuhalten des geschlossenen Zustandes einer Schutzeinrichtung einer Maschine, wobei die Vorrichtung (10) eine an einem ersten Teil (4) der Einrichtung (1) festlegbare Eingriffseinrichtung (20) umfasst, die mindestens ein Eingriffselement (22) aufweist, das in dem zu arretierenden vorgebbaren Zustand der Einrichtung (1) in Eingriff mit einer Aufnahmeeinrichtung (30) bringbar ist, die an einem zweiten Teil (8) der Einrichtung (1) festlegbar ist oder Bestandteil des zweiten Teils (8) der Einrichtung (8) ist, und dadurch der vorgebbare Zustand der Einrichtung (1) arretierbar ist, wobei der Sicherheitsschalter (40) einen an dem einen Teil (4, 8) der Einrichtung (1) festlegbaren Lesekopf (16) und einen mit dem Lesekopf (16) vorzugsweise kontaktlos in Wirkverbindung bringbaren und an dem anderen Teil (8, 4) der Einrichtung (1) festlegbaren Betätiger (18) aufweist, wobei das Eingriffselement (22) aus einer Ausgangsstellung heraus um eine erste Achse (24) drehbar ist und dabei in dem zu arretierenden vorgebbaren Zustand der Einrichtung (1) in Eingriff mit der Aufnahmeeinrichtung (30) bringbar ist, und wobei die Vorrichtung (10) ein gesteuert aktivierbares Arretierelement (26) aufweist, das beim Aktivieren in Anlage an das Eingriffselement (22) bringbar ist und dadurch ein Zurückdrehen des Eingriffselement (22) durch Formschluss blockiert und somit den vorgebbaren Zustand der Einrichtung (1) arretiert, **dadurch gekennzeichnet, dass** die Eingriffseinrichtung (20) zwei Eingriffselemente (22) aufweist, die aus ihrer jeweiligen Ausgangsstellung heraus gegensinnig drehbar sind und dabei jeweils in Eingriff mit der Aufnahmeeinrichtung (30) bringbar sind.

2. Sicherheitsschalter nach Anspruch 1, **dadurch gekennzeichnet, dass** das Eingriffselement (22) einen Eingriffsschenkel (58) aufweist, der in der Ausgangsstellung des Eingriffselements (22) bei einer Annäherung der beiden Teile (4, 8) der Einrichtung (1) in eine einen Hinterschnitt (36) aufweisende Nut (32) der Aufnahmeeinrichtung (30) einführbar ist, und dass der Eingriffsschenkel (58) beim Drehen des Eingriffselements (22) in den Hinterschnitt (36) der Nut (32) eingreift und dadurch den vorgebbaren Zustand der Einrichtung (1) arretiert.

3. Sicherheitsschalter nach einem der Ansprüche 1 oder 2, **dadurch gekennzeichnet, dass** das Eingriffselement (22) eine vorzugsweise konkave Arretierfläche (66) aufweist, an welche das Arretierelement (26) in seinem aktivierten Zustand in Anlage bringbar ist und dadurch ein Zurückdrehen des Eingriffselements (22) durch Formschluss blockiert.

4. Sicherheitsschalter nach einem der Ansprüche 1 bis 3, **dadurch gekennzeichnet, dass** das Arretierelement (26) beim Aktivieren aus einer Ausgangsstellung heraus um eine zweite Achse (50) drehbar und/oder schiebbar und dabei in Anlage an das Eingriffselement (22) bringbar ist und dadurch ein Zurückdrehen des Eingriffselements (22) durch Formschluss blockiert.

5. Sicherheitsschalter nach Anspruch 4, **dadurch gekennzeichnet, dass** die erste Achse (24), um die das Eingriffselement (22) schwenkbar ist, und die zweite Achse (50), um die das Arretierelement (26) drehbar ist, parallel zueinander verlaufen.

6. Sicherheitsschalter nach einem der Ansprüche 1 bis 5, **dadurch gekennzeichnet, dass** das Eingriffselement (22) eine erste Anlagefläche (52) aufweist, die bei einer Annäherung der Eingriffseinrichtung (20) an die Aufnahmeeinrichtung (30) in Anlage an ein Spreizmittel (54) der Aufnahmeeinrichtung (30) bringbar ist und beim weiteren Annähern an dem Spreizmittel (54) entlang gleitet und dabei das Eingriffselement (22) um die erste Achse (24) dreht.

7. Sicherheitsschalter nach einem der Ansprüche 1 bis 6, **dadurch gekennzeichnet, dass** das Eingriffselement (22) eine zweite Anlagefläche (62) aufweist, die bei einem Entfernen der Eingriffseinrichtung (20) von der Aufnahmeeinrichtung (30) in Anlage an ein Rückstellmittel (64) der Aufnahmeeinrichtung(30) bringbar ist und beim weiteren Entfernen an dem Rückstellmittel (64) entlang gleitet und dabei das Eingriffselement (22) um die erste Achse (24) in Richtung seiner Ausgangsstellung zurückdreht.

8. Sicherheitsschalter nach einem der Ansprüche 1 bis 7, **dadurch gekennzeichnet, dass** die Eingriffseinrichtung (20) mit dem Eingriffselement (22) und dem Arretierelement (26) in einer einen Hinterschnitt (46) aufweisenden Nut (42) einer ersten Profilschiene (44) angeordnet ist, die an dem ersten, vorzugsweise feststehenden Teil (4) der Einrichtung (1) festlegbar ist oder Bestandteil des ersten Teils (4) der Einrichtung (1) ist.

9. Sicherheitsschalter nach einem der Ansprüche 1 bis 8, **dadurch gekennzeichnet, dass** die Aufnahmeeinrichtung (30) eine zweite Profilschiene (34) aufweist, die an dem zweiten, vorzugsweise beweglichen Teil (8) der Einrichtung (1) festlegbar ist oder Bestandteil des zweiten Teils (8) der Einrichtung (1) ist, und dass die Nut (32) der Aufnahmeeinrichtung (30) durch die zweite Profilschiene (34) ausgebildet ist.

## Claims

1. Safety switch for signalling a predeterminable state of equipment, comprising a device (10) for releasable locking of a predeterminable state of the equipment (1), particularly for releasable retention of the closed state of protective equipment of a machine, wherein the device (10) comprises an engagement device (20), which is fixable to a first part (4) of the equipment (1) and comprises at least one engagement element (22), which in the predeterminable state - which is to be locked - of the equipment (1) can be brought into engagement with a receiving device (30), which is fixable to a second part (8) of the equipment (1) or is a component of the second part (8) of the equipment (1), and the predeterminable state of the equipment (1) is thereby lockable, wherein the safety switch (40) comprises a reader head (16) fixable to the one part (4, 8) of the equipment (1) and an actuator (18) able to be brought, preferably contactlessly, into operative connection with the reader head (16) and fixable to the other part (4) of the equipment (1), wherein the engagement element (22) is rotatable about a first axis (24) out of a starting setting and in that case can be brought into engagement with the receiving device (30) in the predeterminable state - which is to be locked - of the equipment (1) and wherein the device (10) comprises a locking element (26) which is capable of controlled activation and which when activation takes place can be brought into contact with the engagement element (22) and thereby blocks, by mechanically positive couple, return rotation of the engagement element (22) and thus locks the predeterminable state of the equipment (1), **characterised in that** the engagement device (20) comprises two engagement elements (22) which are rotatable in opposite sense out of the respective starting settings thereof and can thereby be respectively brought into engagement with the receiving device (30).

2. Safety switch according to claim 1, **characterised in that** the engagement element (22) has an engagement limb (58) which in the starting setting of the engagement element (22) is introducible into a groove (32), which has an undercut (36) of the receiving device (30) when the two parts (4, 8) of the equipment (1) approach and that the engagement limb (58) when rotation of the engagement element (22) takes place engages in the undercut (36) of the groove (32) and thereby locks the predeterminable state of the equipment (1).

3. Safety switch according to one of claims 1 and 2, **characterised in that** the engagement element (22) has a preferably concave locking surface (66) with which the locking element (26) can be brought into contact in its activated state and thereby blocks return rotation of the engagement element (22) by mechanically positive couple.

4. Safety switch according to any one of claims 1 to 3, **characterised in that** the locking element (26) when activated is rotatable about a second axis (50) out of a starting setting and/or slidable out of the setting and **in that** case can be brought into contact with the engagement element (22) and thereby blocks return rotation of the engagement element (22) by mechanically positive couple.

5. Safety switch according to claim 4, **characterised in that** the first axis (24) about which the engagement element (22) is pivotable and the second axis (50) about which the locking element (26) is rotatable extend parallel to one another.

6. Safety switch according to any one of claims 1 to 5, **characterised in that** the engagement element (22) has a first contact surface (52) which on approach of the engagement element (20) to the receiving device (30) can be brought into contact with a spreading means (54) of the receiving device (30) and on further approach slides along the spreading means (54) and **in that** case rotates the engagement element (22) about the first axis (24).

7. Safety switch according to any one of claims 1 to 6, **characterised in that** the engagement element (22) has a second contact surface (62) which when the engagement device (20) is removed from the receiving device (30) can be brought into contact with a restoring means (64) of the receiving device (30) and on further removal slides along the restoring means (64) and **in that** case produces return rotation of the engagement element (22) about the first axis (24) in the direction of its starting setting.

8. Safety switch according to any one of claims 1 to 7, **characterised in that** the engagement device (20) with the engagement element (22) and the locking element (26) is arranged in a groove (42), which has an undercut (46), of a first profile rail (44), which is fixable to the first, preferably stationary, part (4) of the equipment (1) or is a component of the first part (4) of the equipment (1).

9. Safety switch according to any one of claims 1 to 8, **characterised in that** the receiving device (30) comprises a second profile rail (34) which is fixable to the second, preferably movable, part (8) of the equipment (1) or is a component of a second part (8) of the equipment (1) and that the groove (32) of the receiving device (30) is formed by the second profile rail (34).

## Revendications

1. Contacteur de sécurité destiné à signaler un état prédéfinissable d'un dispositif, comprenant un arrangement (10) destiné à bloquer de manière amovible un état prédéfinissable du dispositif (1), notamment destiné à maintenir fermé de manière amovible l'état fermé d'un dispositif de protection d'une machine, l'arrangement (10) comportant un dispositif de mise en prise (20) qui peut être fixé au niveau d'une première partie (4) du dispositif (1), lequel possède au moins un élément de mise en prise (22) qui, dans l'état prédéfinissable à bloquer du dispositif (1), peut être mis en prise avec un dispositif d'accueil (30) qui peut être fixé à une deuxième partie (8) du dispositif (1) ou qui est un élément constitutif de la deuxième partie (8) du dispositif (1), et l'état prédéfinissable du dispositif (1) peut ainsi être bloqué, le contacteur de sécurité (40) possédant une tête de lecture (16) pouvant être fixée à une partie (4, 8) du dispositif (1) et un actionneur (18) pouvant être amené en liaison fonctionnelle, de préférence sans contact, avec la tête de lecture (16) et pouvant être fixée à l'autre partie (8, 4) du dispositif (1), l'élément de mise en prise (22) pouvant tourner autour d'un premier axe (24) à partir d'une position initiale et pouvant ainsi être amené dans l'état prédéfinissable à bloquer du dispositif (1) en prise avec le dispositif d'accueil (30), et l'arrangement (10) possédant un élément de blocage (26) activable de manière commandée qui, lors de l'activation, peut être amené en appui contre l'élément de mise en prise (22) et arrête ainsi une rotation en arrière de l'élément de mise en prise (22) par complémentarité de formes et bloque ainsi l'état prédéfinissable du dispositif (1), **caractérisé en ce que** le dispositif de mise en prise (20) possède deux éléments de mise en prise (22) qui, à partir de leur position initiale respective, peuvent tourner en sens inverse et peuvent alors respectivement être amenés en prise avec le dispositif d'accueil (30).

2. Contacteur de sécurité selon la revendication 1, **caractérisé en ce que** l'élément de mise en prise (22) possède une branche de mise en prise (58) qui, dans la position initiale de l'élément de mise en prise (22), lors de l'approche des deux parties (4, 8) du dispositif (1), peut être introduite dans une rainure (32) possédant une contre-dépouille (36) du dispositif d'accueil (30), et **en ce que** la branche de mise en prise (58), lors de la rotation de l'élément de mise en prise (22), vient en prise dans la contre-dépouille (36) de la rainure (32) et bloque ainsi l'état prédéfinissable du dispositif (1).

3. Contacteur de sécurité selon l'une des revendications 1 et 2, **caractérisé en ce que** l'élément de mise en prise (22) possède une surface de blocage (66) de préférence concave, contre laquelle l'élément de blocage (26) peut être amené en appui dans son état activé et arrête ainsi une rotation en arrière de l'élément de mise en prise (22) par complémentarité de formes.

4. Contacteur de sécurité selon l'une des revendications 1 à 3, **caractérisé en ce que** l'élément de blocage (26), lors de l'activation à partir d'une position initiale, peut tourner autour d'un deuxième axe (50) et/ou peut coulisser et peut ainsi être amené en appui contre l'élément de mise en prise (22) et arrête ainsi une rotation en arrière de l'élément de mise en prise (22) par complémentarité de formes.

5. Contacteur de sécurité selon la revendication 4, **caractérisé en ce que** le premier axe (24), autour duquel peut pivoter l'élément de mise en prise (22), et le deuxième axe (50), autour duquel peut tourner l'élément de blocage (26), suivent un tracé parallèle l'un à l'autre.

6. Contacteur de sécurité selon l'une des revendications 1 à 5, **caractérisé en ce que** l'élément de mise en prise (22) possède une première surface d'appui (52) qui, lors d'une approche du dispositif de mise en prise (20) vers le dispositif d'accueil (30), peut être amenée en appui contre un moyen d'écartement (54) du dispositif d'accueil (30) et, lors de la poursuite de l'approche, glisse contre le moyen d'écartement (54) le long de celui-ci et tourne ainsi l'élément de mise en prise (22) autour du premier axe (24).

7. Contacteur de sécurité selon l'une des revendications 1 à 6, **caractérisé en ce que** l'élément de mise en prise (22) possède une deuxième surface d'appui (62) qui, lors de l'éloignement du dispositif de mise en prise (20) du dispositif d'accueil (30), peut être amenée en appui contre un moyen de rappel (64) du dispositif d'accueil (30) et, lors de la poursuite de l'éloignement, glisse contre le moyen de rappel (64) le long de celui-ci et tourne ainsi l'élément de mise en prise (22) autour du premier axe (24) en direction de sa position initiale.

8. Contacteur de sécurité selon l'une des revendications 1 à 7, **caractérisé en ce que** le dispositif de mise en prise (20) avec l'élément de mise en prise (22) et l'élément de blocage (26) est disposé dans une rainure (42) possédant une contre-dépouille (46) d'un premier rail profilé (44), lequel peut être fixé à une première partie (4), de préférence fixe, du dispositif (1) ou qui est un élément constitutif de la première partie (4) du dispositif (1).

9. Contacteur de sécurité selon l'une des revendications 1 à 8, **caractérisé en ce que** le dispositif d'accueil (30) possède un deuxième rail profilé (34) qui peut être fixé à la deuxième partie (8), de préférence mobile, du dispositif (1) ou qui est un élément constitutif de la deuxième partie (8) du dispositif (1), et **en ce que** la rainure (32) du dispositif d'accueil (30) est formée par le deuxième rail profilé (34).
